# EUROPÄISCHE PATENTANMELDUNG

(11) **EP 0 691 358 A1**
(43) Veröffentlichungstag der Anmeldung: **10.01.1996**
(21) Anmeldenummer: 95106398.1
(22) Anmeldetag: 28.04.1995
(51) Int. Cl.: C08G 59/14, C08G 59/17, C08L 63/10, C09D 163/10

(54) **Verfahren zur Herstellung von aminmodifizierten Epoxy(meth)acrylaten**

(30) Priorität: 11.05.1994 DE 4416624
(71) Anmelder: BAYER AG, D-51368 Leverkusen (DE)
(72) Erfinder: Meixner, Jürgen, Dr., D-47803 Krefeld (DE); Fischer, Wolfgang, Dr., D-40668 Meerbusch (DE)

(57) **Zusammenfassung**

Ein Verfahren zur Herstellung von aminmodifizierten Epoxy(meth)acrylaten durch Umsetzung von Epoxidgruppen aufweisenden organischen Verbindungen mit a) Acryl- und/oder Methacrylsäure in einer Menge von 0,8 bis 0,99 Carboxyläquivalenten pro Epoxidäquivalent und b) basischen, NH-Gruppen aufweisenden Stickstoffverbindungen in einer Menge von 0,01 bis 0,2 NH-Äquivalenten pro Epoxidäquivalent, wobei zumindest 0,01 NH-Äquivalent pro Epoxidäquivalent der gemäß Stufe b) eingesetzten Basen erst nach Beendigung der Umsetzung gemäß Stufe a) mit den dann noch vorliegenden Epoxidgruppen zur Reaktion gebracht werden und die Verwendung der so hergestellten aminmodifizierten Epoxy(meth)acrylate als Bindemittel in Überzugsmitteln, Spachtel- oder Dichtmassen oder zur Herstellung von Formkörpern.

## Beschreibung

Die Erfindung betrifft ein verbessertes Verfahren zur Herstellung von aminmodifizierten Epoxy(meth)acrylaten und deren Vewendung als radikalisch härtbare Bindenmittel in Überzugsmitteln, Spachtel- oder Dichtmassen oder zur Herstellung von Formkörpern.

Epoxy(meth)acrylate, auch Vinylesterharze genannt, werden durch Umsetzung von Epoxidgruppen aufweisenden Verbindungen, insbesondere den an sich bekannten Epoxidharzen mit Acrylsäure bzw. Methacrylsäure in Gegenwart eines Katalysators hergestellt. Unter "aminmodifizierten Epoxy(meth)acrylaten" sollen im Rahmen der Erfindung solche derartige Umsetsungsprodukte verstanden werden, die durch Umsetzung nur eines Teils der Epoxidgruppen mit (Meth)Acrylsäure und eines weiteren Teils der Epoxidgruppen der Ausgangsverbindungen mit Ammoniak und/oder mit (cyclo)aliphatischen primären oder sekundären Aminen erhalten worden sind.

Derartige aminmodifizierte Epoxy(meth)acrylate werden als Bindemittel für Formmassen und als Überzugsmittel, insbesondere als UV-strahlenhärtbare Lackbindemittel eingesetzt. Ihre Herstellung erfolgt, indem man, wie z. B. in der DE-OS 2429527 beschrieben, ein Polyepoxid mit mehr als einer Epoxidgruppe pro Molekül zuerst mit 0,01 bis 0,5 NH-Äquivalenten, bezogen auf 1 Epoxidäquivalent, Ammoniak oder eines aliphatischen oder cycloaliphatischen, primären oder sekundären Amins und anschließend mit 0,99 bis 0,5 Carboxyläquivalenten, bezogen auf 1 Epoxidäquivalent, Acryl- oder Methacrylsäure umsetzt.

Die nach diesem Verfahren hergestellten aminmodifizierten Epoxy(meth)acrylate enthalten durch nicht quantitativen Umsatz meist geringe Mengen nicht umgesetztes Polyepoxid oder (Meth)-Acrylsäure. Beides ist unerwünscht.

Die DE-OS 2534012 schlägt deshalb ein modifiziertes Verfahren vor, bei dem die Epoxidgruppen eines Polyepoxids zuerst wieder mit 0,01 - 0,5 NH-Äquivalenten, bezogen auf 1 Epoxidäquivalent Ammoniak und/oder eines primären oder sekundären Amins, anschließend mit 0,4 - 0,9 Carboxyläquivalenten, bezogen auf 1 Epoxidäquivalent, der Acryl- oder Methacrylsäure und daran anschließend mit 0,09 bis 0,5 Carboxyläquivalenten, bezogen auf 1 Epoxidgruppe, einer gesättigten Carbonsäure umgesetzt werden. Auf diese Weise erhält man ein Produkt, das bei vollständigem Epoxidumsatz eine Restmenge gesättigter Carbonsäuren enthält.

Die Herstellung der vorstehend genannten Bindemittel birgt jedoch ein schwieriges Problem, nämlich die Umsetzung des Polyepoxids mit der aktive Wasserstoffatome enthaltenden Stickstoffverbindung. Aminogruppen enthaltende Stickstoffverbindungen besitzen nämlich nicht nur die Eigenschaft, sich an Epoxygruppen zu addieren, sondern sie können auch auf katalytischem Wege die Polymerisation der Epoxygruppen mit sich selbst in Gang setzen. Nur bei niedrigen Temperaturen und bei geringen Aminmengen gelingt es, bevorzugt die Additionsreaktion ablaufen zu lassen, ohne daß durch Polymerisation eine unerwünschte Viskositätssteigerung auftritt.

Ein weiterer Nachteil des letztgenannten Verfahrens ist der teilweise Ersatz von ungesättigten Carbonsäuren durch gesättigte Carbonsäuren. Hierdurch wird die Doppelbindungsdichte im Epoxy-(meth)acrylat gesenkt, was bei der radikalischen Vernetzung des Bindemittels zu einer geringeren Reaktivität führt.

Weiterhin ist es bei diesem Verfahren notwendig, die Reaktionstemperatur bei der Herstellung eine sehr lange Zeit aufrechtzuerhalten, um die nötigen Kennzahlen, wie niedrige Epoxid- und Säurezahlen zu erreichen. Dies ist sowohl aus ökonomischen Gründen als auch wegen einer möglichen Verschlechterung der Produktqualität nachteilig.

Aufgabe der vorliegenden Erfindung war es deshalb, ein Verfahren zur möglichst raschen Herstellung von aminmodifizierten Epoxy(meth)acrylaten bereitzustellen, bei dem sowohl die Gelierungsgefahr durch Polymerisation der Epoxidgruppen herabgesetzt wird als auch eine möglichst hohe Doppelbindungsdichte gewährleistet ist, ohne daß restliche (Meth)Acrylsäure im Produkt verbleibt.

Die Aufgabe wurde dadurch gelöst, daß bei der Umsetzung von Epoxidgruppen aufweisenden Verbindungen mit (Meth)Acrylsäure und Ammoniak bzw. primären oder sekundären Aminen die genannten Basen zumindest zum Teil erst am Ende der Umsetzung zur Reaktion gebracht werden. Vorzugsweise wird die Gesamtmenge der zum Einsatz gelangenden Basen erst nach Beendigung der Umsetzung mit den Säuren mit den dann noch verbleibenden Epoxidgruppen zur Reaktion gebracht. Erstaunlicherweise erhält man bei dieser Arbeitsweise bei relativ kurzen Herstellzeiten Produkte, die den Produkten des Standes der Technik bezüglich Viskosität ähnlich sind, ohne daß eine Restmenge an Carbonsäuren oder Epoxidgruppen vorhanden ist. Das ist besonders überraschend, da bekanntlich primäre und sekundäre Amine sehr rasch auch mit aktivierten Doppelbindungen wie (Meth)acryloylgruppen reagieren (Michael-analoge Addition). Der Fachmann konnte daher nicht erwarten, daß beim erfinderischen Verfahren Epoxy(meth)acrylate mit üblichen Viskositäten entstehen, und dies ist vermutlich auch der Grund, weswegen in den oben diskutierten Vorveröffentlichungen ausschließlich die umgekehrte Reihenfolge der Reaktionsschritte in Betracht gezogen worden ist.

Gegenstand der Erfindung ist ein Verfahren zur Herstellung von aminmodifizierten Epoxy(meth)acrylaten durch Umsetzung von Epoxidgruppen aufweisenden organischen Verbindungen mit
a) Acryl- und/oder Methacrylsäure in einer Menge von 0,8 bis 0,99 Carboxyläquivalenten pro Epoxidäquivalent und
b) basischen Stickstoffverbindungen, ausgewählt aus der Gruppe bestehend aus Ammoniak, (cyclo)aliphatischen primären oder sekundären Aminen und Gemischen derartiger Basen, in einer Menge von 0,01 bis 0,2 NH-Äquivalenten pro Epoxidäquivalent,
unter praktisch vollständiger Umsetzung der ursprünglich vorliegenden Epoxidgruppen, dadurch gekennzeichnet, daß zumindest 0,01 NH-Äquivalente pro Epoxidäquivalent der gemäß Stufe b) eingesetzten Basen erst nach Beendigung der Umsetzung gemaß Stufe a) mit den dann noch vorliegenden Epoxidgruppen zur Reaktion gebracht werden.

Gegenstand der Erfindung ist auch die Verwendung der nach diesem Verfahren erhältlichen aminmodifizierten Epoxy(meth)acrylate als Bindemittel in radikalisch härtbaren Überzugsmitteln, Spachtel- oder Dichtmassen oder zur Herstellung von Formkörpern.

Im Rahmen der Erfindung wird die Umsetzung der Säuren als "beendet", d.h. der Zeitpunkt des Beginns der letzten Umsetzung als erreicht angesehen, wenn mindestens 80 Äquivalentprozent der gemäß Stufe a) eingesetzten Säure abreagiert sind.

Unter Epoxidgruppen aufweisenden Verbindungen werden im Rahmen der vorliegenden Erfindung organische Verbindungen des Molekulargewichtsbereichs Mₙ 130 bis 1000 verstanden, die (im statistischen Mittel) pro Molekül mindestens eine, vorzugsweise 1,5 bis 6 und besonders bevorzugt 1,5 bis 2, Epoxidgruppen enthalten. Ein "Epoxidäquivalent" bedeutet die Menge einer Epoxidverbindung in "Gramm", die ein Mol Epoxidgruppen enthält.

Beispiele geeigneter Epoxidgruppen aufweisender Verbindungen sind insbesondere solche des Epoxidäquivalentgewichtsbereichs 100 bis 500. Konkrete Beispiele sind Polyglycidylether mehrwertiger Phenole wie beispielsweise Brenzkatechin, Resorcin, Hydrochinon, 4,4'-Dihydroxydiphenylmethan, 4,4'-Dihydroxydiphenyldimethylmethan (Bisphenol A), 4,4'-Dihydroxydiphenylcyclohexan, 4,4'-Dihydroxydiphenylsulfon, Tris-(4-hydroxyphenyl)-methan, Novolaken (d. h. aus Umsetzungsprodukten von ein- oder mehrwertigen Phenolen mit Aldehyden, insbesondere Formaldehyd, in Gegenwart saurer Katalysatoren).

Weiter seien beispielhaft genannt: Glycidylether von Monoalkoholen wie n-Butanol oder 2-Ethyl-hexanol oder Glycidylether mehrwertiger Alkohole, beispielsweise aus 1,4-Butandiol, 1,4-Butendiol, 1,6-Hexandiol, Glycerin, Trimethylolpropan, Pentaerythrit und Polyethylenglykolen, Triglycidylisocyanurat, N,N'-Diepoxypropyloxamid, Polyglycidylthioether aus mehrwertigen Thiolen, wie beispielsweise aus Bismercaptomethylbenzol, Diglycidyltrimethylentrisulfon oder auch Glycidylester von Monocarbonsäuren wie Versaticsäure oder Glycidylester mehrwertiger, aromatischer, aliphatischer und cycloaliphatischer Carbonsäuren, beispielsweise Phthalsäurediglycidylester, Isophthalsäurediglycidylester, Terephthalsäurediglycidylester, Tetrahydrophthalsäurediglycidylester, Adipinsäurediglycidylester und Hexahydrophthalsäurediglycidylester.

Die Reaktion der Epoxide mit Acryl- und/oder Methacrylsäure erfolgt nach bekannten Methoden, beispielsweise nach den Verfahren der DE-OS 2429527 oder DE-OS 2534012 in Substanz oder in Lösungsmitteln. Geeignete Lösungsmittel sind beispielsweise inerte Lösungsmittel, wie Butylacetat, Toluol, Cyclohexan, Gemische derartiger Lösungsmittel oder aber auch copolymerisierbare Monomere der nachstehend beispielhaft genannten Art.

Die Umsetzung der (Meth)acrylsäure mit den Epoxidgruppen aufweisenden Verbindungen wird im allgemeinen in Gegenwart von etwa 0,01 - 3 Gew.-%, bezogen auf Ausgangsepoxid, an Katalysatoren, wie tert. Amine, quartäre Ammoniumsalze, Alkalihydroxide, Alkalisalze organischer Carbonsäuren, Mercaptane, Dialkylsulfide, Sulfonium-, Phosphoniumverbindungen oder Phosphine, durchgeführt. Besonders bevorzugt ist die Verwendung von quartären Ammoniumsalzen wie z. B. Triethylbenzylammoniumchlorid.

Für die Reaktionsstufe a) des erfindungsgemäßen Verfahrens, haben sich Umsetzungstemperaturen von 40 bis 90°C als zweckmäßig erwiesen, die jedoch in speziellen Fällen nach oben oder unten überschritten werden können. Dabei gelangen auf 1 Epoxidäquivalent 0,8 - 0,99 vorzugsweise 0,85 bis 0,98, Carboxyl-Äquivalente (Meth)-Acrylsäure zum Einsatz.

Unter 1 Carboxyl-Äquivalent wird die Menge Carbonsäure in Gramm verstanden, in der ein Mol Carboxylgruppen enthalten sind.

Bei den gemäß Stufe b) einzusetzenden, Stickstoff enthaltenden Basen, handelt es sich um Ammoniak und/oder bevorzugt um (cyclo)aliphatische primäre und/oder sekundäre Mono- oder Polyamine des Molekulargewichtsbereichs 31 bis 300.

Beispiele für primäre Amine sind insbesondere Mono- und Diamine, wie Methylamin, n-Butylamin, n-Hexylamin, 2-Ethylhexylamin, Cyclohexylamin, Ethanolamin, Benzylamin, Ethylendiamin, die isomeren Diaminobutane, die isomeren Diaminohexane oder 1,4-Diamino-cyclohexan.

Beispiele für sekundäre Amine sind Dimethylamin, Diethylamin, N-Methylethanolamin, Diethanolamin, Diisopropanolamin oder N-Cyclohexylisopropylamin.

Die beispielhaft genannten Stickstoffbasen werden in solchen Mengen eingesetzt, daß auf jedes Epoxidäquivalent der zu Beginn der Reaktion zum Einsatz gelangenden, Epoxidgruppen aufweisenden Verbindungen, 0,01 bis 0,2 vorzugsweise 0,02 bis 0,15 NH-Äquivalente der Stickstoff enthaltenden Basen entfallen, wobei unter "NH-Äquivalent" die Menge der Basen verstanden wird, in der ein Grammatom an an basischen Stickstoff gebundenem Wasserstoff enthalten ist.

Auch die Stufe b) des erfindungsgemäßen Verfahrens kann in Substanz, oder in Lösungsmitteln der bereits beispielhaft genannten Art erfolgen. Die Reaktionstemperatur liegt im allgemeinen ebenfalls bei 40 bis 90°C, wobei in Ausnahmefallen diese Temperaturen auch nach oben oder unter überschritten werden können.

Bei der Durchrührung des erfindungsgemäßen Verfahrens ist es wesentlich, daß mindestens 0,01, vorzugsweise mindestens 0,02, NH-Äquivalente der basischen Stickstoffverbindungen pro Epoxidäuqivalent, vorzugsweise die Gesamtmenge der basischen Stickstoffverbindungen erst nach Beendigung der Reaktion mit der gemäß Stufe a) einzusetzenden Säurekomponente zum Einsatz gelangen. Dies bedeutet, daß es im Prinzip denkbar ist, einen Teil der gemäß Stufe b) einzusetzenden Stickstoffverbindungen vor der Reaktion mit den ungesättigten Carbonsäure mit den Epoxidgruppen aufweisenden Verbindungen umzusetzen, vorausgesetzt, die letztgenannte Bedingung wird eingehalten. Besonders bevorzugt erfolgt die Durchführung des erfindungsgemäßen Verfahrens jedoch dergestalt, daß man zunächst die Reaktion gemäß Stufe a) zu Ende führt und anschließend die Stufe b) durchführt. Hierbei gilt die Stufe a) entsprechend den bereits oben gemachten Ausführungen als beendet, wenn mindestens 80, vorzugsweise mindestens 90, Äquivalentprozent der gemäß Stufe a) einzusetzenden Säuren abreagiert haben.

Dies kann an einer entsprechenden Abnahme der Säurezahl des Reaktionsgemischs erkannt werden.

Bei der Durchführung des erfindungsgemäßen Verfahrens wird im übrigen darauf geachtet, daß durch die Teilreaktionen a) und b) alle ursprünglich vorhandenen Epoxidgruppen im wesentlichen abreagiert sind. Dies bedeutet in der Praxis, daß die Summe der Äquivalente der gemäß Stufe a) und b) einzusetzenden Reaktionspartner pro Äquivalent an ursprünglich vorliegenden Epoxidgruppen bei mindestens 1,0, vorzugsweise bei 1,0 bis 1,1, liegt.

Um die polymerisierbaren, erfindungsgemäß erhaltenen Reaktionsprodukte vor unerwünschter vorzeitiger Polymerisation zu bewahren, empfiehlt es sich, bereits bei der Herstellung 0,001 - 0,2 Gew.-%, bezogen auf das gesamte Reaktionsgemisch, inklusive Hilfs- und Zusatzmitteln, an Polymerisationsinhibitoren oder Antioxidantien zuzusetzen.

Geeignete Hilfsmittel dieser Art sind beispielsweise Phenole und Phenolderivate, vorzugsweise sterisch gehinderte Phenole.

Weitere geeignete Stabilisatoren sind in "Methoden der organischen Chemie" (Houben-Weyl), 4. Auflage, Band XIV/1, S. 433 - 452, 756, Georg Thieme Verlag, Stuttgart, 1961, beschrieben. Sehr gut geeignet sind z. B. 2,6-Di-tert.-butyl-p.-kresol und/oder Hydrochinonmonomethylether oder Phenothiazin.

Die erfindungsgemäßen aminmodifizierten Verfahrensprodukte können teilweise ohne Zusatz copolymerisierbarer Monomerer oder Lösemittel zur Anwendung gelangen. Da es sich jedoch in vielen Fällen um hochviskose Produkte handelt, empfiehlt es sich, sie mit copolymerisierbaren Monomeren oder mit inerten Lösungsmitteln zu verdünnen, um verarbeitungsgerechte Viskositäten zu erhalten und/oder die Eigenschaften der ausgehärteten Produkte gezielt zu beeinflussen, es sei denn, derartige Monomere oder Lösungsmittel wurden bereits als Reaktionsmedium bei der Durchführung des erfindungsgemäßen Verfahrens in ausreichenden Mengen mitverwendet, um den diesbezüglichen Forderungen der Praxis zu entsprechen.

Geeignete copolymerisierbare Monomere sind beispielsweise Di- und Polyacrylate sowie Di- und Polymethacrylate von Glykolen mit 2 bis 6 C-Atomen und Polyolen mit 3 - 4 Hydroxylgruppen und 3 bis 6 C-Atomen, wie Ethylenglykoldiacrylat, Propandiol-1,3-diacrylat, Butandiol-1,4-diacrylat, Hexandiol-1,6-diacrylat, Trimethylolpropantriacrylat, Pentaerythrittri- und -tetraacrylat sowie entsprechende Methacrylate, ferner Di(meth)-acrylate von Polyetherglykolen des Glykols, Propandiol-1,3, Butandiol-1,4, Triacrylate der Umsetzungsprodukte aus 1 Mol Trimethylolpropan und 2,5 bis 5 Mol Ethylenoxid und/oder Propylenoxid, Tri- und Tetraacrylate der Umsetzungsprodukte aus 1 Mol Pentaerythrit und 3 bis 6 Mol Ethylenoxid und/oder Propylenoxid. Weitere copolymerisierbare Monomere sind z.B. aromatische Vinylverbindungen wie Styrol, Vinylalkylether wie Vinylbutylether oder Triethylenglykoldivinylether und Allylverbindungen wie Triallylisocyanurat.

Vorzugsweise kommen copolymerisierbare Monomere in Mengen von bis zu 70 Gew.-%, bezogen auf das Gesamtgewicht der copolymerisierbaren Bindemittelkomponenten, sei es als Reaktionsmedium bei der Durchführung des Verfahrens oder als nachträglich zugesetztes Hilfsmittel zum Einsatz. Auch Lösungsmittel der bereits oben beispielhaft genannten Art oder auch Ketongruppen aufweisende Lösungsmittel wie beispielsweise Aceton, Ethylmethylketon oder Cyclohexanon können in Mengen von bis zu 70 Gew.-%, bezogen auf Gesamtgewicht inklusive aller Hilfs- und Zusatzmittel während der erfindungsgemäßen Umsetzung oder im Anschluß als Verbindungsmittel verwendet werden, wobei allerdings die Gesamtmenge an copolymerisierbaren Monomeren und Lösungsmitteln der beispielhaft genannten Art 70 Gew.-%, bezogen auf das Gesamtgewicht des gebrauchsfertigen Beschichtungsmittel, nicht übersteigen sollte.

Die erfindungsgemäßen Verfahrensprodukte bzw. ihre Mischungen mit anderen copolymerisierbaren Monomeren stellen wertvolle mittels energiereicher Strahlung, wie UV-Licht, Elektronen- oder Gammastrahlen aushärtbare Systeme dar. Die Aushärtung kann auch in Gegenwart von Radikale liefernden Substanzen wie (Hydro)Peroxide, gegebenenfalls in Gegenwart von Beschleunigern, erfolgen.

Wenn die erfindungsgemäßen Reaktionsprodukte als oder zur Herstellung von durch UV-Licht härtbare Überzugsmassen eingesetzt werden sollen, wobei ihr besonderer Vorteil darin liegt, daß sie auch in Gegenwart von Luftsauerstoff in sehr kurzen Zeiten aushärten, ist der Zusatz von Fotoinitiatoren erforderlich.

Als Fotoinitiatoren sind die üblicherweise eingesetzten Verbindungen geeignet, wie sie z. B. in "Methoden der organischen Chemie" (Houben-Weyl), Band E 20, Seite 80 ff., Georg Thieme Verlag, Stuttgart 1987, beschrieben sind.

Gut geeignet sind z.B. Benzoinether wie Benzoinisopropylether, Benzilketale, wie z.B. Benzildimethylketal und Hydroxyalkylphenone, wie z.B. 1-Phenyl-2-hydroxy-2-methylpropan-1-on, sowie Benzophenon und dessen Derivate.

Die erwähnten Fotoinitiatoren, die je nach Verwendungszweck der erfindungsgemäßen Produkte in Mengen zwischen 0,1 bis 10 Gew.-%, vorzugsweise 0,1 bis 5 Gew.-%, bezogen auf das Gewicht der erfindungsgemäßen Reaktionsprodukte und der gegebenenfalls zugesetzten copolymerisierbaren Monomeren, eingesetzt werden, können als einzelne Substanz oder, wegen häufiger vorteilhafter synergistischer Effekte, auch in Kombination miteinander verwendet werden.

Besonders bevorzugt werden die erfindungsgemäßen Verfahrensprodukte als Bindemittelkomponente für Beschichtungsmittel zur Beschichtung der unterschiedlichsten Substrate, wie z. B. Papier, Kartonage, Leder, Holz, Kunststoffe, Vlies, Textilien, keramische Materialien, mineralische Materialien, Glas, Metall, Kunstleder, fotografische Materialien, wie z. B. mit fotografischer Schicht versehenes Papier und als Bindemittel für Formmassen eingesetzt. Ferner können die erfindungsgemäßen Verfahrensprodukte als Bindemittel für radikalisch härtbare Spachtel- oder Dichtmassen der an sich bekannten Art eingesetzt werden.

Die nachfolgenden Beispiele dienen der weiteren Erläuterung der Erfindung. Alle Prozentangaben beziehen sich auf das Gewicht.

### Beispiele

Die in Tabelle 1 genannte Menge an Epoxid wird zusammen mit 0,1 % Di-tert.-butyl-p.-kresol und 0,5 % Triethylbenzylammoniumchlorid in der in Tabelle 1 genannten Menge an copolymerisierbaren Monomeren gelöst und unter Rühren und unter Einleitung von Luft auf 60°C erhitzt.

Bei dieser Temperatur wird die in Tabelle 1 genannte Menge an (Meth)Acrylsäure innerhalb 1 Stunde zugegeben. Es wurde bei 80°C so lange nachgerührt, bis eine Säurezahl von kleiner 3 (mg KOH/g Substanz), entsprechend einem Umsatz von mindestens 97 % der eingesetzten (Meth)acrylsäure, erreicht war. Darauf wird bei 80°C die in Tabelle 1 genannte Menge an Amin so zudosiert, daß die Temperatur konstant bleibt. Nach einer Nachrührphase bei 80°C von 3 Stunden wird eine Säurezahl kleiner 1 (mg KOH/g Substanz) und ein Gehalt an Epoxidsauerstoff kleiner 0,3 % geffinden und die Mischung abgekühlt.

**Tabelle 1**

| **Epoxy(meth)acrylat** | **1** | **2** | **3** | **4** | **5** | **6** |
|---|---|---|---|---|---|---|
| Ausgangsmaterialien (Val) | | | | | | |
| Bisphenol-A-diglycidylether (Epoxidäquivalent: 190) | 1,0 | 1,0 | 1,0 | 1,0 | | 1,0 |
| Hexandiol-1,6-diglycidylether (Epoxidäquivalent: 145) | | | | | 1,0 | |
| Acrylsäure | 0,92 | 0,96 | 0,95 | 0,92 | 0,92 | |
| Methacrylsäure | | | | | | 0,95 |
| Ethanolamin | 0,04 | 0,02 | | | 0,04 | 0,025 |
| Cyclohexylamin | | | 0,025 | | | |
| Hexamethylendiamin | | | | 0,02 | | |
| Diethylamin | | 0,02 | | | | |

| Copolymerisierbares Monomer | | | | | | |
|---|---|---|---|---|---|---|
| %, bezogen auf Gesamtgemisch Hexandiol-1,6-diacrylat | 20 | 20 | 20 | 20 | 20 | |
| Styrol | | | | | | 20 |
| Viskosität (mPa.s/23°C) | 18200 | 25000 | 24400 | 22900 | 1500 | 2800 |

## Patentansprüche

1. Verfahren zur Herstellung von aminmodifizierten Epoxy(meth)acrylaten durch Umsetzung von Epoxidgruppen aufweisenden organischen Verbindungen mit
a) Acryl- und/oder Methacrylsäure in einer Menge von 0,8 bis 0,99 Carboxyläquivalenten pro Epoxidäquivalent und
b) basischen Stickstoffverbindungen, ausgewählt aus der Gruppe bestehend aus Ammoniak, (cyclo)aliphatischen primären oder sekundären Aminen und Gemischen derartiger Basen, in einer Menge von 0,01 bis 0,2 NH-Äquivalenten pro Epoxidäquivalent,
unter praktisch vollstandiger Umsetzung der ursprünglich vorliegenden Epoxidgruppen, dadurch gekennzeichnet, daß zumindest 0,01 NH-Äquivalente pro Epoxidäquivalent der gemäß Stufe b) eingesetzten Basen erst nach Beendigung der Umsetzung gemäß Stufe a) mit den dann noch vorliegenden Epoxidgruppen zur Reaktion gebracht werden.

2. Verfahren gemäß Anspruch 1, dadurch gekennzeichnet, daß die Gesamtmenge der gemaß Stufe b) zum Einsatz gelangenden Basen erst im Anschluß an die Umsetzung gemäß Stufe a) mit den dann noch vorliegenden Epoxidgruppen zur Reaktion gebracht wird.

3. Verfahren gemäß Anspruch 1, dadurch gekennzeichnet, daß zur Katalyse der Umsetzungen 0,01 bis 0,3 Gew.-%, bezogen auf das Gewicht der Epoxidgruppen aufweisenden Verbindungen, an quartären Ammoniumsalzen zur Anwendung kommen.

4. Verwendung der gemäß Anspruch 1 bis 3 erhältlichen aminmodifizierten Epoxy(meth)acrylate als Bindemittel in radikalisch härtbaren Überzugsmitteln, Spachtel- oder Dichtmassen oder zur Herstellung von Formkörpern.
